# EUROPEAN PATENT SPECIFICATION

(11) **EP 1 803 516 B1**
(45) Date of publication and mention of the grant of the patent: **01.02.2012**
(21) Application number: 06126967.6
(22) Date of filing: 22.12.2006
(51) Int. Cl.: B23D 47/02, B23Q 1/74, B27B 5/22, F16C 29/06

(54) **Support arm for machines for machining panels made of wood or the like**
Tragarm für Maschinen zur Bearbeitung von Platten aus Holz oder ähnlichem
Bras de support pour machines d'usinage de panneaux faits de bois ou analogue

(30) Priority: 28.12.2005 IT BO20050794
(43) Date of publication of application: 04.07.2007
(73) Proprietor: SCM Group S.p.A., 47921 Rimini (RN) (IT)
(72) Inventor: PUCCI, Aureliano, 47921 Rimini (IT)
(74) Representative: Lanzoni, Luciano

(56) References cited:
- EP-A- 0 376 414
- DE-A1- 1 628 864
- DE-A1- 2 656 822
- DE-A1- 2 656 822
- DE-A1- 10 123 976
- DE-A1- 10 217 570
- FR-A- 2 600 384
- FR-A1- 2 600 384
- US-A- 6 112 785

## Description

The present invention relates to a support arm for machines for machining panels made of wood or the like as per the preamble of claim 1. An example of such a support is disclosed by DE 102 17 570 A.

The machines using the support arm in accordance with the present text may be lower vertical routers, known to experts in the field as "spindle moulders", or circular sawing or squaring machines.

These two types of machines are used for various types of machining on panels made of wood or the like (for example, the former for moulding, tenoning for rails or stiles which will be used to make door or window frames, and the latter for cutting panels, even squarely) and with medium productivity.

Both machines basically consist of:
- a lower base;
- a worktable extending horizontally to support the panels positioned on the base;
- a tool protruding from the worktable (with motor-driven machining axes, vertical for the spindle moulder, and horizontal for the sawing machine).

In both machines, the panels to be machined are moved along the worktable in a predetermined direction of feed (X axis) so that they intercept the machining tool (with stock removal).

Obviously, over time, accessories have been added on these machines to improve operation in terms of quantity and quality.

One of these accessories, of particular interest in the present text is an auxiliary frame.

This frame is usually used when machining very large panels and is constrained to the worktable to support the panel.

The frame extends cantilever-style transversally from one side of the worktable, is coplanar with the latter, and can slide parallel with the direction of panel feed on the worktable, so that the frame can be both positioned relative to the tool and can perform an operating movement during panel machining.

At a structural level, the auxiliary frame has, at one end, a system for guiding and sliding connection on the edge of the worktable, and a lower arm, which can rotate and is mobile in a horizontal plane, designed to allow the frame to be supported and remain coplanar with the worktable during movement.

In a known solution, this arm comprises a first element or sleeve and a second, extension element, which slides in the sleeve to form a telescopic arm.

The sleeve pivots, at its rear end, at the base, whilst the second, extension element has a vertical rod, rotatably associated with the front end of the second element, on one side, and with the auxiliary frame on the other side, so as to form a lower load-bearing structure for the frame during its movement parallel with the direction of panel feed. The second element slides in both directions in the sleeve, adapting to the position of the frame, thanks to the presence of a plurality of idle wheels, housed in the sleeve, and on both sides of the second element to constrain the edges of the second element and allow it to slide parallel with the sleeve.

However, over time this arm structure may lead to stiffness, making it difficult for the arm and the frame as a whole to slide, particularly when the second element is in the most extended position and its natural bending (caused partly by the weight above it) tends to limit arm sliding: said lack of smoothness causes difficulties with frame manoeuvrability during machining, especially when fairly heavy panels are resting on it.

Added to this is the problem caused by the presence of openings in the sleeve which allow the passage, into the zone where the second element is housed in the sleeve, of dirt present in the working environment (dust and fragments of material from machining).

The build-up over time of this dirt in the sleeve, together with the movement of the second element, may cause the dirt to be compacted on the second element and on the wheels, with obvious and further stiffening of arm sliding.

An analogous solution is disclosed in DE 10217570, which describes a machine for machinig wood and having a supporting arm for supporting the auxiliary frame. The supporting arm has a sleeve pivoted at the fixed frame of the machine, a first member slidably inserted in the sleeve and having a sleeve portion in which a second member in slidably inserted. The sleeve and the two members constitute a supporting, pivotable and telescopic connection between the fixed frame of the machine and the auxiliary frame.

The aim of the present invention is therefore to overcome the above-mentioned disadvantages by providing a support arm for machines for machining panels made of wood or the like which is extremely practical, precise and whose movements are extremely smooth irrespective of the weight supported by the frame.

Accordingly, the present invention achieves this aim with a support arm for machines for machining panels made of wood or the like, in particular a support arm comprising the technical features described in claim 1.

The technical features of the invention, with reference to the above aims, are clearly described in the claims below and its advantages are more apparent from the detailed description which follows, with reference to the accompanying drawings which illustrate a preferred embodiment of the invention provided merely by way of example without restricting the scope of the invention defined by the claims, and in which:
- Figure 1 is a perspective view with some parts cut away, of a machine for machining panels equipped with the support arm in accordance with the present invention;
- Figure 2 is an exploded perspective view of the support arm in accordance with the present invention;
- Figure 3 is a side view of the arm of Figure 2 assembled;
- Figure 4 is a side view in cross-section of the arm of Figure 3;

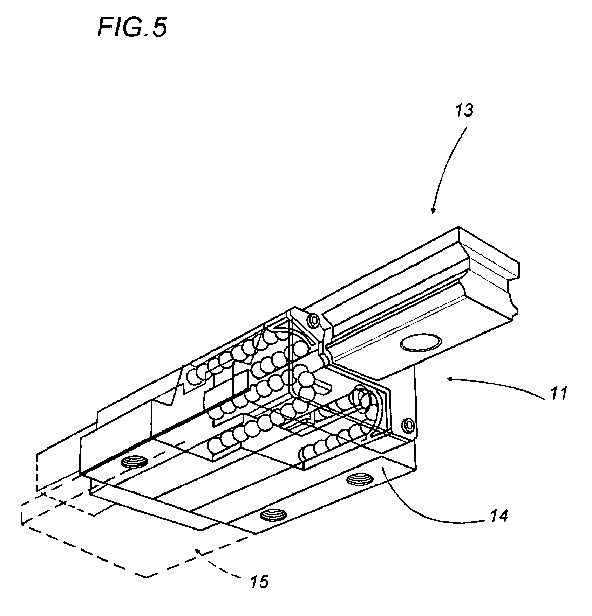

- Figure 5 is a perspective view with some parts cut away to better illustrate others, of a detail of the system of Figure 4 for arm constraint and sliding.

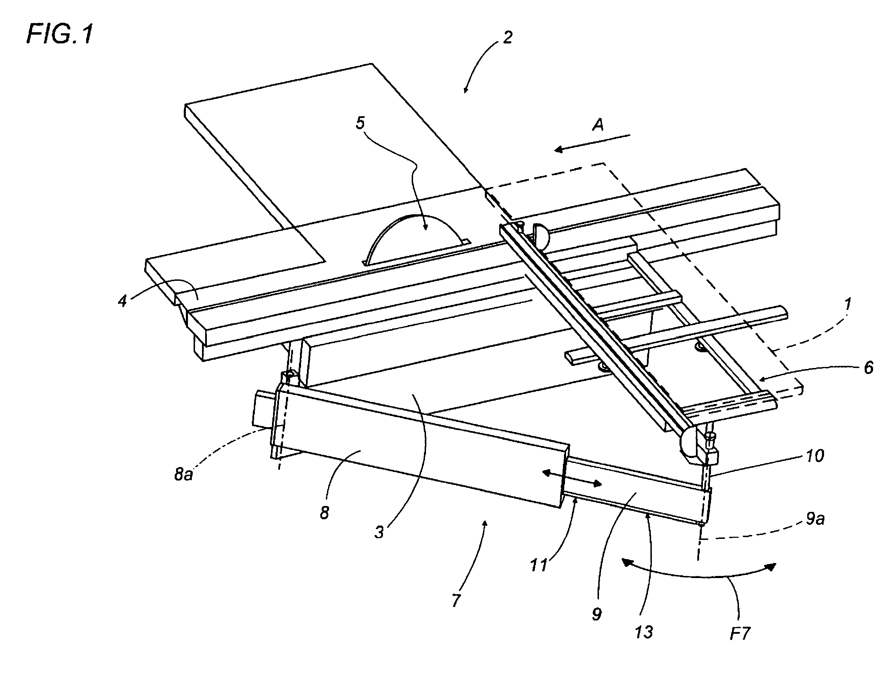

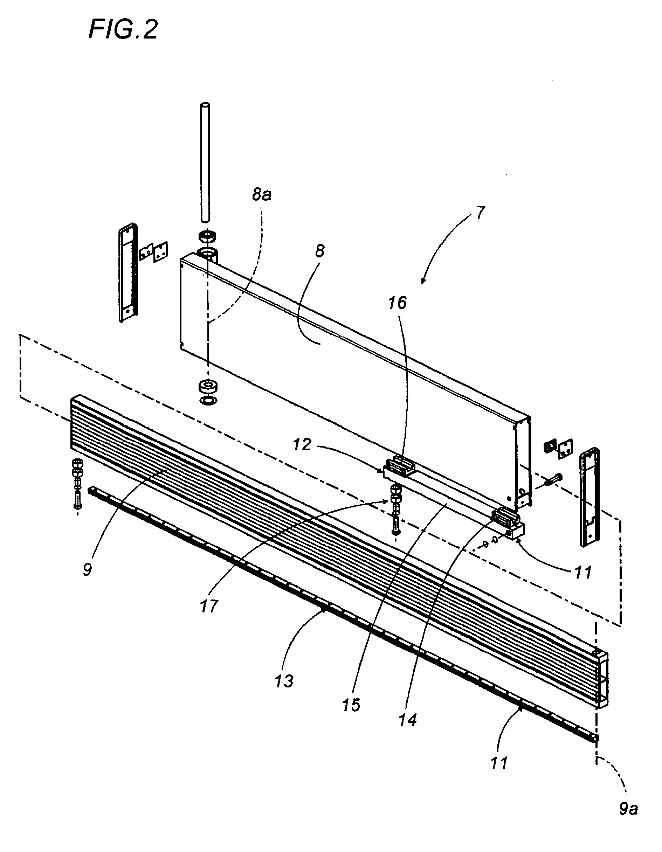

With reference to the accompanying drawings, and in particular with reference to Figures 1 and 2, the numeral 7 denotes as a whole the support arm in accordance with the invention, used on machines for machining panels made of wood or the like.

The machine illustrated in Figure 1 is a sawing or squaring machine, but the arm 7 may also be used on other machines, such as "spindle moulders", without the solution losing any of its originality.

The main parts of these machines, labelled 2, are:
- a lower base 3 supporting a horizontal table 4 on which the panel 1 (only partly illustrated in Figure 1) rests;
- a motor-driven machining tool 5, at least partly protruding from the table 4 (a saw or other tool, depending on the type of machine);
- an auxiliary frame 6 (or sliding table) supporting part of the panel 1, projecting from the table 4, slidably associated with the horizontal table 4 and mobile along the table 4 parallel with a direction A of panel 1 feed if on a fixed-table spindle moulder, or able to slide together with the table 4 (after being locked in position on the table 4) if on a sawing machine;
- an arm 7 supporting the frame 6, consisting of at least a sleeve 8 pivoting, at one end 8a, at the base 3, and an arm 7 extension element 9, slidably housed in the sleeve 8 and constrained at 9a, at one end, to the projecting portion of the frame 6 by a vertical rod 10. This configuration allows the arm 7 to rotate along a horizontal plane (parallel with the table 4) in both directions (see arrow F7 in Figure 1) constantly supporting the frame 6 during its movements thanks to the rotation of the sleeve 8 and sliding of the extension element 9.

As illustrated in Figures 2 to 4, inserted between the sleeve 8 and the extension element 9 there are means 11 for guiding the sliding movement, in both directions, of the extension element 9 relative to the sleeve 8.

These guide means 11 comprise:
- a sliding element 12 or recirculating ball screw guide constrained in the sleeve 8 and slidably connected to
- a rod-shaped guide element 13, integral with the extension element 9 and designed to form, together with the sliding element 12, a prismatic connection.

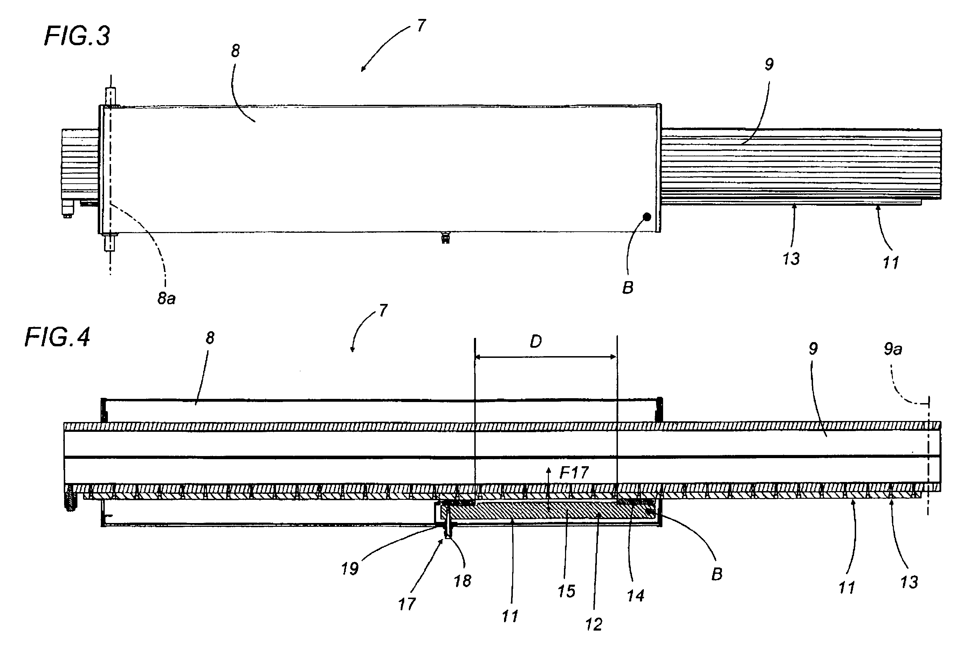

The sliding and guide elements 12 and 13 basically form a linear recirculating balls guide (as illustrated in the detail in Figure 4).

The **sliding** element 12 may comprise at least one recirculating balls slide 14 associated with a support 15 constrained in the sleeve 8.

The **sliding** element 12 may preferably comprise a pair of recirculating balls slides 14 and 16 associated with a single support 15 constrained in the sleeve 8.

The two slides 14 and 16 may be associated with the respective ends of the single support 15, or in any case at a predetermined distance D.

This single support 15 pivots, at one end and at B, at the sleeve 8, whilst the other end of the support 8 is subject to the action of means 17 for adjusting the position of the extension element 9, that is to say for adjusting the parallelism of the **extension** element 9 relative to the sleeve 8.

The above-mentioned adjusting means 17 may comprise an adjusting screw 18 which can be connected by screwing into a seat 19 in the support 8, and coming out of the sleeve 8 transversally, so as to allow a variation in the position of the support 15 relative to the sleeve 8 (see arrow F17 in Figure 4).

To complete the structure of the guide means 11, the rod-shaped guide element 13 is consists of a prismatic guide associated with the extension element 9 (formed by a tubular rod) along its lower surface.

Therefore, the arm structured in this way achieves the preset aims, thanks to the presence of a mechanical coupling provided by the linear recirculating balls guide which brings significant advantages:
- it is not affected by the weight above, thanks to the fact that it is made of extremely rigid material, which means that the arm movement is always smooth;
- the guide system is self-cleaning, thanks to intrinsic features of the slides (that is to say the movement of the balls), thus preventing stiffness from developing over time;
- the presence of the adjustable support always allows a correction of the position of the extension element relative to the sleeve, so that the parallelism is always precise, as is the movement between the two elements.

The invention described is suitable for obvious industrial applications and can be modified and adapted in several ways without thereby departing from the scope of the claims.

## Claims

1. A support arm for machines for machining panels made of wood or the like, the machines (2) of the type comprising at least:
- a lower base (3) supporting a horizontal table (4) on which the panel (1) rests;
- a motor-driven machining tool (5), at least partly protruding from the table (4);
- an auxiliary frame (6) for supporting part of the panel (1), projecting from the table (4), slidably associated with the horizontal table (4) and mobile parallel with a direction (A) of panel (1) feed;
- the support arm (7) for supporting a frame (6) consisting of at least a sleeve (8) pivotable, at one end, at a base (3), and an arm extension element (9), slidably housed in the sleeve (8) and constrainable, at one end, to a projecting portion of a frame (6) by a vertical rod (10); wherein inserted between the sleeve (8) and the extension element (9) there are means (11) for guiding the sliding movement, in both directions, of the extension element (9) relative to the sleeve (8), and comprising a sliding element (12) or a recirculating balls guide constrained in the sleeve (8), the arm (7) being **characterised in that** the guiding means (11) also comprises a rod-shaped guide element (13), connected to the sliding element (12) integral with the extension element (9) and designed to form, together with the sliding element (12), a prismatic connection, the rod-shaped guide element consisting of a prismatic guide (13) associated with the extension element (9) along a lower surface of the extension element (9).

2. The arm according to claim 1, **characterised in that** the **sliding element (12) and the rod-shaped guide element (13)** form a linear recirculating balls guide.

3. The arm according to claim 1, **characterised in that** the sliding element (12) comprises at least one recirculating balls slide (14) associated with a support (15) constrained in the sleeve (8).

4. The arm according to claim 1, **characterised in that** the **sliding** element (12) comprises at least a pair of recirculating balls slides (14, 16) associated with a single support (15) constrained in the sleeve (8); the two slides (14, 16) being associated with the respective ends of the single support (15).

5. The arm according to claim 3 or 4, **characterised in that** the single support (15) pivots, at one end and at (B), at the sleeve (8), and the other end of the single support (15) is subject to the action of means (17) for adjusting the position of the extension element (9), that is to say for adjusting the parallelism of the element (9) relative to the sleeve (8).

6. The arm according to claim 5, **characterised in that** the adjusting means (17) comprise an adjusting screw (18) which can be connected by screwing in a seat (19) in the single support (8), and coming out of the sleeve (8) transversally, so as to allow a variation in the position of the single support (15) relative to the sleeve (8).

7. **The arm according to claim 1, characterised in that the extension element (9) is formed by a tubular rod.**

## Patentansprüche

1. Tragarm für Maschinen zur Bearbeitung von Platten aus Holz oder ähnlichem, wobei Maschinen (2) des Typs mindestens Folgendes umfassen:
- eine untere Basis (3), die einen horizontalen Tisch (4) trägt, auf dem die Platte (1) aufliegt;
- ein motorbetriebenes Bearbeitungswerkzeug (5), das zumindest teilweise aus dem Tisch (4) hervorragt;
- einen Hilfsrahmen (6) zum Tragen eines Teils der Platte (1), der aus dem Tisch (4) hervorragt, der verschiebbar an den horizontalen Tisch (4) anschließt und parallel in eine Richtung (A) des Vorschubs der Platte (1) beweglich ist;
- wobei der Tragarm (7) zum Tragen eines Rahmens (6) aus mindestens einer Hülse (8) besteht, die an einem Ende schwenkbar an einer Basis (3) gelagert ist sowie aus einem Armverlängerungselement (9), das verschiebbar in der Hülse (8) untergebracht ist und an einem Ende an einem hervorragenden Abschnitt eines Rahmens (6) durch eine vertikale Stange (10) einspannbar ist, wobei zwischen die Hülse (8) und das Verlängerungselement (9) Mittel (11) zum Führen der Verschiebungsbewegung des Verlängerungselements (9) in beide Richtungen relativ zur Hülse (8) eingefügt sind, und umfassend ein Verschiebungselement (12) oder eine Kugelumleitführung, die in der Hülse (8) eingespannt ist, wobei der Arm (7) **dadurch gekennzeichnet ist, dass** die Führungsmittel (11) ferner ein stangenförmiges Führungselement (13) umfassen, das mit dem Verschiebungselement (11), das einstückig mit dem Verlängerungselement (9) verbunden ist, verbunden ist und dazu konzipiert ist, gemeinsam mit dem Verschiebungselement (12) eine prismenförmige Verbindung zu bilden, wobei das stangenförmige Führungselement aus einer prismenförmigen Führung (13) besteht, die an das Verlängerungselement (9) entlang einer unteren Oberfläche des Verlängerungselements (9) anschließt.

2. Arm nach Anspruch 1, **dadurch gekennzeichnet, dass** das Verschiebungselement (12) und das stangenförmige Führungselement (13) eine geradlinige Kugelumleitführung bilden.

3. Arm nach Anspruch 1, **dadurch gekennzeichnet, dass** das Verschiebungselement (12) mindestens einen Kugelumleitschieber (14) umfasst, der an einen Träger (15) anschließt, der in der Hülse (8) eingespannt ist.

4. Arm nach Anspruch 1, **dadurch gekennzeichnet, dass** das Verschiebungselement (12) mindestens ein Paar Kugelumleitschieber (14, 16) umfasst, die an einen einzelnen Träger (15) anschließen, der in der Hülse (8) eingespannt ist, wobei die beiden Schieber (14, 16) an die entsprechenden Enden des einzelnen Trägers (15) anschließen.

5. Arm nach Anspruch 3 oder 4, **dadurch gekennzeichnet, dass** der einzelne Träger (15) an einem Ende und an (B) schwenkbar an der Hülse (8) gelagert ist und das andere Ende der Einwirkung von Mitteln (17) zur Anpassung der Position des Verlängerungselements (9) unterliegt, d. h. zur Anpassung der Parallelität des Elements (9) relativ zur Hülse (8).

6. Arm nach Anspruch 5, **dadurch gekennzeichnet, dass** die Anpassungsmittel (17) eine Anpassungsschraube (18) umfassen, die verbunden werden kann, indem sie in eine Aufnahme (19) im einzelnen Träger (8) eingeschraubt wird und transversal aus der Hülse (8) herauskommt, sodass eine Änderung der Position des einzelnen Trägers (15) relativ zur Hülse (8) gestattet wird.

7. Arm nach Anspruch, 1, **dadurch gekennzeichnet, dass** das Verlängerungselement (9) aus einer rohrförmigen Stange gebildet wird.

## Revendications

1. Bras de support pour machines d'usinage de panneaux faits de bois ou analogue, les machines (2) du type comprenant au moins :
- une base inférieure (3) soutenant une table horizontale (4) sur laquelle repose le panneau (1) ;
- une machine-outil entraînée par un moteur (5), dépassant au moins en partie de la table (4) ;
- une armature auxiliaire (6) pour soutenir une partie du panneau (1), faisant saillie de la table (4), associée de façon coulissante à la table horizontale (4) et pouvant se déplacer parallèlement à une direction (A) d'acheminement du panneau (1) ;
- le bras de support (7) pour soutenir une armature (6) composé d'au moins une douille (8) pivotant, à une extrémité, sur une base (3), et d'un élément de rallonge (9) du bras, logé de façon coulissante dans la douille (8) et pouvant être arrêté, à une extrémité, sur une partie saillante d'une armature (6) par une tige verticale (10) ; dans lequel des moyens (11) sont insérés entre la douille (8) et l'élément de rallonge (9) pour guider le mouvement coulissant, dans les deux directions, de l'élément de rallonge (9) par rapport à la douille (8), et comportant un élément coulissant (12) ou un guide à recirculation de billes arrêté dans la douille (8), le bras (7) **se caractérisant en ce que** les moyens de guidage (11) comprennent également un élément de guidage en forme de tige (13), relié à l'élément coulissant (12) solidaire de l'élément de rallonge (9) et conçu pour former, avec l'élément coulissant (12), une liaison prismatique, l'élément de guidage en forme de tige consistant en un guide prismatique (13) associé à l'élément de rallonge (9), le long d'une surface inférieure de l'élément de rallonge (9).

2. Bras selon la revendication 1, **caractérisé en ce que** l'élément coulissant (12) et l'élément de guidage en forme de tige (13) forment un guide linéaire à recirculation de billes.

3. Bras selon la revendication 1, **caractérisé en ce que** l'élément de guidage (12) comprend au moins une glissière à recirculation de billes (14) associée à un support (15) arrêté dans la douille (8).

4. Bras selon la revendication 1, **caractérisé en ce que** l'élément coulissant (12) comprend au moins une paire de glissières à recirculation de billes (14, 16) associées à un support unique (15) arrêté dans la douille (8) ; les deux glissières (14, 16) étant associées aux extrémités respectives du support unique (15).

5. Bras selon les revendications 3 ou 4, **caractérisé en ce que** le support unique (15) pivote, à une extrémité et à (B), sur la douille (8), et l'autre extrémité du support unique (15) est exposée à l'action des moyens (17) pour rectifier la position de l'élément de rallonge (9), autrement dit pour rectifier le parallélisme de l'élément (9) par rapport à la douille (8).

6. Bras selon la revendication 5, **caractérisé en ce que** les moyens de rectification (17) comprennent une vis de réglage (18) qui peut être couplée par vissage à un logement (19) sur le support unique (8), et sortant de la douille (8) transversalement pour pouvoir modifier la position du support unique (15) par rapport à la douille (8).

7. Bras selon la revendication 1, **caractérisé en ce que** l'élément de rallonge (9) consiste en une tige tubulaire.
